# EUROPÄISCHE PATENTSCHRIFT

(11) **EP 4 008 940 B1**
(45) Veröffentlichungstag und Bekanntmachung des Hinweises auf die Patenterteilung: **15.05.2024**
(21) Anmeldenummer: 20211049.0
(22) Anmeldetag: 01.12.2020
(51) Int. Cl.: F16K 31/04, F16K 31/52, F16K 31/528, F16K 37/00, F16K 1/22

(54) **SCHWERLASTVENTILANTRIEB MIT SERVOMOTOR**
HEAVY DUTY VALVE DRIVE WITH SERVOMOTOR
ENTRAÎNEMENT DE SOUPAPE DE CHARGE LOURDE POURVU DE SERVOMOTEUR

(43) Veröffentlichungstag der Anmeldung: 08.06.2022
(73) Patentinhaber: NTF Korfhage Maschinenbau GmbH, 49328 Melle (DE)
(72) Erfinder: Stallkamp, Frank, 49134 Wallenhorst (DE)
(74) Vertreter: Wischmeyer, André

(56) Entgegenhaltungen:
- WO-A1-2018/216526
- GB-A- 1 460 200
- JP-A- H11 336 940
- KR-A- 20200 069 707
- US-A- 3 651 711
- US-A- 3 877 677
- US-A- 5 085 401

## Beschreibung

Die vorliegende Erfindung betrifft einen Schwerlastventilantrieb zur Bewegung eines Ventils.

Derartige Schwerlastventilantriebe werden zum Antrieb von Ventilen, die mit einer Vierteldrehung geöffnet bzw. geschlossen werden (quarter-turn-valves), eingesetzt wie beispielsweise Kugelventile oder Absperrklappen. Schwerlastventilantriebe sind insbesondere dafür ausgelegt, Ventile in Transportpipelines für Erdöl bzw. Erdgas zu bewegen. Derartige Transportpipelines weisen typischerweise Durchmesser zwischen 0,2 m und 1,5 m auf. Entsprechend groß sind die von den Schwerlastventilantrieben zu bewegenden Ventilkörper der in derartigen Transportpipelines verbauten Ventile. Die Ventile müssen innerhalb weniger Sekunden geöffnet bzw. geschlossen werden können. Für Notfälle werden teilweise Schließ- bzw. Öffnungszeiten von 0,5 Sekunden verlangt. Durch die Schwerlastventilantriebe müssen somit entsprechend große Drehmomente auf die von ihnen anzutreibende Ventile aufbringbar sein.

Neben dem Einsatz in Transportpipelines finden derartige Schwerlastventilantriebe auch in chemischen Anlagen, Kraftwerken, Fördereinrichtungen für Öl und/oder Erdgas oder auf Schiffen Verwendung, wobei die Aufzählung der Verwendungsmöglichkeiten nicht abschließend ist.

Schwerlastventilantriebe für mit Vierteldrehungen zu öffnende bzw. zu schließende Ventile weisen häufig einen Scotch-Yoke-Mechanismus auf. Ein solcher Scotch-Yoke-Mechanismus setzt eine lineare Bewegung in eine Drehbewegung um. Das auf einen Ventilkörper des Ventils wirkende Drehmoment ist hierbei variabel. Das Drehmoment ist typischerweise jeweils in den Endstellungen am größten.

Der Scotch-Yoke-Mechanismus weist eine Welle auf, über die der Ventilkörper gedreht werden kann. An der Welle ist eine Hebelschwinge angeordnet, die in radialer Richtung eine längliche Ausnehmung aufweist. Diese bildet das Joch (Scotch-Yoke) aus. In der länglichen Ausnehmung ist ein Gleitkörper verschieblich angeordnet. Der Gleitkörper ist drehbar um einen Zapfen gelagert oder weist einen Zapfen auf. Der Zapfen ist an einem linear bewegbaren Gleitblock angeordnet oder gelagert, der entlang einer Führungsstange verschiebbar ist. Der Gleitblock wird über eine Kolbenstange entlang der Führungsstange verschoben. In den jeweiligen Endlagen ist der Gleitkörper in radialer Richtung von der Welle betrachtet außen am Hebelarm angeordnet. Eine durch die Kolbenstange aufgebrachte Kraft bewirkt durch den langen Hebelarm ein hohes Drehmoment. Wenn die Hebelschwinge senkrecht zur Führungsschiene ausgerichtet ist, ist der Abstand des Gleitkörpers zur Welle und somit der Hebelarm minimal und vergrößert sich bei weiterer Bewegung wieder zunehmend.

Die bekannten Schwerlastventilantriebe werden hydraulisch oder pneumatisch betrieben. Bei Verwendung für Transportpipelines kann die Energie für den Schwerlastventilantrieb durch das in der entsprechenden Transportpipeline strömende Fluid, beispielsweise Rohöl oder Erdgas, bereitgestellt werden.

Derartige Schwerlastventilantriebe benötigen Betriebsmittel wie Hydrauliköl. Zudem müssen diese Schwerlastventilantriebe bzw. die von ihnen bewegten Ventile mit Sensoren ausgestattet sein, damit ein Betreiber einer entsprechenden Transportpipeline über den Öffnungszustand eines entsprechenden Ventils in einer Transportpipeline informiert ist.

Aus dem Stand der Technik sind auch elektromotorisch betriebene Ventilantriebe bekannt. So offenbart die US 5,085,401 A einen elektromotorisch betriebenen Ventilantrieb mit einem Scotch-Yoke-Mechanismus umfassend einen auf einem Gewindeschaft angeordnete Antriebsmutter.

In der US 3,877,677 A ist ebenfalls ein elektromotorisch betreibbarer Ventilantrieb mit einem Scotch-Yoke-Mechanismus umfassend eine auf einem Gewindeschaft angeordnete Antriebsmutter.

WO2018/216526 A1 offenbart einen elektromotorisch betriebenen Ventilantrieb mit einem einen Kugelgewindetrieb umfassenden Scotch-Yoke-Mechanismus. Aufgabe der vorliegenden Erfindung ist es, einen Schwerlastventilantrieb bereitzustellen, der kostengünstig erstellt und betrieben werden kann, auf potenziell umweltschädliche Betriebsmittel verzichtet und einfach nachrüstbar ist.

Gelöst wird diese Aufgabe durch einen Schwerlastventilantrieb gemäß Anspruch 1. Der Schwerlastventilantrieb weist einen Servomotor zum Antrieb des Scotch-Yoke-Mechanismus sowie ein zwischen dem Servomotor und dem Scotch-Yoke-Mechanismus angeordnetes Untersetzungsgetriebe auf.

Ein Servomotor ist Teil eines Servoantriebs, der neben dem Servomotor einen Servoumrichter mit einer Steuerungseinrichtung für den Servomotor aufweist. Ein Servomotor umfasst einen Elektromotor sowie zumindest einen Sensor, insbesondere zur Positionsbestimmung einer Motorwelle. Es können verschiedene Elektromotoren wie Schrittmotoren, Gleichstrommotoren, Wechselstrommotoren, Synchronmotoren und Asynchronmotoren zum Einsatz kommen. In einem Servoantrieb kann ein Servomotor mit einer Lage-, Geschwindigkeits- und/oder Momentenregelung betrieben werden. Der erfindungsgemäße Schwerlastventilantrieb wird somit elektrisch angetrieben. Auf die bei pneumatischen oder hydraulischen Antrieben etwaig notwendigen Betriebsmittel kann verzichtet werden. Wenn der Servomotor schlupffrei mit dem Ventil verbunden ist und der Servomotor eine elektronische Lageregelung aufweist, kann aus den Daten der Lageregelung des Servomotors die Position des Ventils ermittelt werden. Eine separate Instrumentierung des Schwerlastventilantriebs mit dezidierten Lagesensoren wie Endschaltern kann entfallen. Hierdurch werden die Installation und der Betrieb eines erfindungsgemäßen Schwerlastventilantriebs vereinfacht. Alternativ oder zusätzlich kann der Servomotor drehmomentgeregelt sein. Über die beim Verstellen eines mit dem erfindungsgemäßen Schwerlastventilantrieb ausgestatteten Ventils aufgenommenen Drehmomente der Drehmomentregelung des Servomotors kann der Zustand des Ventils bzw. des Ventilkörpers überwacht werden. Wenn das zum Bewegen des Ventils benötigte Drehmoment im Zeitablauf plötzlich ansteigt, deutet dies auf einen Defekt bzw. einen Verschleiß des Ventils hin. Dieses ist schwergängiger geworden. Einem Betreiber einer Einrichtung, deren Ventile mit entsprechenden Schwerlastventilantrieben ausgestattet sind, wird somit eine Fernüberwachung der Ventile und eine vorausschauende Wartung ermöglicht, ohne dass weitere Instrumentierungen und/oder Sensorik vorgesehen werden müssen.

Der Servomotor eines erfindungsgemäßen Schwerlastventilantriebs kann vorzugsweise über die für die andernfalls notwendige Instrumentierung und Ansteuerung herkömmlicher Ventilantriebe notwendigen elektrischen Versorgungsleitungen mit Energie versorgt werden und hierüber Daten an den Betreiber einer entsprechenden Einrichtung zurückmelden. Der Schwerlastventilantrieb kann somit kostengünstig installiert und betrieben werden.

Vorzugsweise ist der Servomotor busfähig. Der Servomotor kann mit Servomotoren von weiteren Schwerlastventilantrieben der Einrichtung in einem BUS-System verbunden sein. Hierdurch wird der Installations- und Betriebsaufwand des Schwerlastventilantriebs weiter verringert.

Zwischen dem Servomotor und dem Scotch-Yoke-Mechanismus ist ein Untersetzungsgetriebe angeordnet. Das Untersetzungsgetriebe wandelt die vergleichsweise geringen Drehmomente des Servomotors in die zum Schließen eines Ventils einer Einrichtung notwendigen hohe Drehmomente um. Der Servomotor führt für eine Vierteldrehung des Absperrkörpers des Ventils einige dutzend bis einige hundert Umdrehungen aus.

Der Servomotor erzeugt eine Drehbewegung. Der Scotch-Yoke-Mechanismus setzt eine Linearbewegung in eine Drehbewegung um. Vorzugsweise ist daher das Untersetzungsgetriebe ausgebildet, eine Drehbewegung des Servomotors in eine Linearbewegung der Kolbenstange des Scotch-Yoke-Mechanismus umzuwandeln.

Das Untersetzungsgetriebe weist einen Kugelgewindetrieb mit einer Spindel und einer Spindelmutter auf. Durch den Kugelgewindetrieb wird eine Drehbewegung des Servomotors in eine Linearbewegung übersetzt. Die Kolbenstange des Scotch-Yoke-Mechanismus ist mit der Spindelmutter verbunden. Die Spindel wird zum Bewegen des Ventils durch den Servomotor in Rotation versetzt. Der Kugelgewindetrieb setzt somit die Drehungen des Servomotors in einen Vorschub der Kolbenstange um. Dieser Vorschub der Kolbenstange wird im Scotch-Yoke-Mechanismus des Schwerlastventilantriebs wiederum in eine Drehbewegung zur Bewegung des Absperrkörpers des Ventils umgesetzt.

Erfindungsgemäß weist das Untersetzungsgetriebe zwei parallel nebeneinander angeordnete Kugelgewindeantriebe auf, deren Spindeln durch denselben Servomotor antreibbar sind. Hierdurch kann auf einfache Weise sichergestellt werden, dass die Spindeln sich mit der gleichen Drehzahl drehen. Bei der Verwendung von positionsgeregelten Servomotoren ist es alternativ auch denkbar, jede Spindel durch einen eigenen Servomotor anzutreiben. Die Spindelmuttern der jeweiligen Kugelgewindetriebe sind über ein Verbindungselement miteinander verbunden und die Kolbenstange des Scotch-Yoke-Mechanismus ist mittig zwischen den verbundenen Spindelmuttern an dem Verbindungselement festgelegt. Durch die Anordnung von zwei parallel nebeneinander angeordneten Kugelgewindetrieben mit verbundenen Spindelmuttern wird erreicht, dass die durch die Kolbenstange auf die Spindelmuttern aufgebrachte Kraft gleichmäßig in beide Spindeln abgeleitet wird. Die bei der Verwendung nur eines Kugelgewindetriebs durch die Kolbenstange auf die Spindelmuttern aufgebrachten Kippmomente werden reduziert bzw. vermieden. Die Belastung der Kugelgewindetriebe wird verringert, wodurch die einzelnen Kugelgewindetriebe kompakter und leichter gebaut werden können und/oder eine höhere Lebensdauer aufweisen. Hierdurch kann ein Schwerlastventilantrieb geschaffen werden, indem von einem herkömmlichen hydraulisch oder pneumatisch betriebenen Ventilantrieb die hydraulischen oder pneumatischen Elemente vom Scotch-Yoke-Mechanismus entfernt und durch das Untersetzungsgetriebe sowie den Servomotor ersetzt werden. Der Antrieb ist somit vereinfacht nachrüstbar.

Vorzugsweise weist der Schwerlastantrieb einen Zahnriementrieb auf. Wenn ein Ventil bewegt, z. B. geöffnet oder geschlossen werden muss, sind zu Anfang der Bewegung Haftreibungskräfte zu überwinden. Das Ventil weist somit ein gewisses Losbrechmoment auf, das durch den Schwerlastventilantrieb aufzubringen ist. Gleichzeitig sind die Anforderungen an die Stellzeiten der Ventile sehr hoch. Die Ventile sind innerhalb von wenigen Sekunden, in Notfällen auch in wenigen Zehntelsekunden zu öffnen oder zu schließen. Entsprechend wirken beim Anfahren hohe Kräfte bzw. Momente auf den Servomotor. Ein im Antriebsstrang des Schwerlastventilantriebs angeordneter Zahnriementrieb, insbesondere ein zwischen dem Servomotor und dem Untersetzungsgetriebe angeordneter Zahnriementrieb, kann durch die Elastizität des Zahnriemens dazu beitragen, diese Belastungsspitzen auf den Servomotor zu reduzieren. Gleichzeitig wird durch den oder die Zahnriemen des Zahnriementriebs ein schlupffreier Antrieb gewährleistet, so dass etwaige durch den Servomotor bereitgestellte Informationen zu Drehmoment und/oder Position verwendet werden können, um auf das zum Bewegen des Ventils notwendige Drehmoment und/oder die Ventilposition rückschließen zu können. Hierdurch wird die Zuverlässigkeit und Lebensdauer eines entsprechenden Schwerlastventilantriebs erhöht.

Vorzugsweise ist der Servomotor explosionsgeschützt ausgeführt. In Transportpipelines, an denen derartige Schwerlastventilantriebe eingesetzt werden, werden typischerweise Erdgas, Erdöl oder Erdölprodukte transportiert. Die in den Transportpipelines transportierten Medien sind somit häufig brennbar. Die an den Transportpipelines anzuordnenden Elemente sind entsprechend der jeweils geltenden Sicherheitsbestimmungen explosionsgeschützt auszuführen. Aber auch für andere Einrichtungen wie chemische Anlagen, Kraftwerke, Fördereinrichtungen oder Schiffe können erhöhte Sicherheitsbestimmungen im Hinblick auf Explosionsgefahren gelten. Bei dem erfindungsgemäßen Schwerlastventilantrieb und einem lage-, geschwindigkeits- und/oder momentengeregelten Servomotor kann eine weitere Instrumentierung des Ventils ggf. entfallen. Die elektrischen Bauteile des Schwerlastventilantriebs sind somit im Bereich des Servomotors konzentriert. Durch eine explosionsgeschützte Ausführung des Servomotors können die Sicherheitsanforderungen eines Transportpipelinebetreibers bzw. der nationalen Regulierungsbehörden dann auf einfache Weise erfüllt werden.

Insbesondere weist der Servomotor eine maximale Leistungsaufnahme zwischen 2,4 kW und 5 kW, bevorzugt zwischen 2,8 kW und 4 kW, besonders bevorzugt von 3,2 kW auf. Derartige Servomotoren sind zur Verwendung in entsprechenden Schwerlastventilantrieben geeignet. Sie können die zum Öffnen und Schließen von Ventilen in Einrichtungen wie Transportpipelines in den geforderten kurzen Zeitspannen von wenigen Sekunden notwendige Leistung bereitstellen. Gleichzeitig ist die maximale Leistungsaufnahme gering genug, um derartige Servomotoren vorzugsweise über geeignete BUS-Systeme mit elektrischer Energie zu versorgen. Hierdurch kann ein entsprechender Schwerlastventilantrieb einfach installiert bzw. eine Einrichtung wie eine Transportpipeline einfach mit Schwerlastventilantrieben ausgestattet werden.

Vorzugsweise ist der Schwerlastventilantrieb ausgebildet, ein maximales Drehmoment zwischen 2.500 Nm und 250.000 Nm, bevorzugt zwischen 5.000 Nm und 60.000 Nm, auf das Ventil aufzubringen. Hiermit ist der Schwerlastventilantrieb zum Einsatz für Ventile zum Beispiel entsprechender Transportpipelines mit entsprechenden Durchmessern einsetzbar.

Bevorzugt weist der Schwerlastventilantrieb einen Energiespeicher auf, der ausgebildet ist, bei einem Ausfall der Spannungsversorgung das Ventil in eine definierte Notfallposition zu bewegen. Die definierte Notfallposition ist hierbei typischerweise ein vollständig geschlossenes oder ein vollständig geöffnetes Ventil. Der Energiespeicher kann beispielsweise durch ein Federpaket gebildet sein, das die Kolbenstange des Scotch-Yoke-Mechanismus dauerhaft mit einer Kraft beaufschlagt, durch die der Scotch-Yoke-Mechanismus das Ventil in die definierte Notfallposition bewegt. Der Servomotor des Schwerlastventilantriebs arbeitet dann beim Bewegen des Ventils aus der definierten Notfallposition heraus gegen die durch das Federpaket aufgebrachte Kraft an.

Besonders bevorzugt ist der Energiespeicher als Akkuspeicher ausgebildet. Der Ackuspeicher speichert elektrische Energie, mit dem der Servomotor auch bei Verlust der Spannungsversorgung betrieben werden kann. Das Ventil kann auch bei Ausfall der Spannungsversorgung über den Servomotor in die definierte Notfallposition bewegt werden. Beim Normalbetrieb ist es somit nicht notwendig, gegen eine das Ventil in die definierte Notfallposition bewegenden Kraft zu bewegen. Der Schwerlastventilantrieb kann leichter und zuverlässiger ausgebildet sein.

Weiter besonders bevorzugt weist der Akkuspeicher ein Batteriemanagementsystem mit einer Kommunikationsschnittstelle auf. Über das Batteriemanagementsystem kann der Zustand des Akkuspeichers online überwacht und/oder der Akku ferngewartet werden. Besonders bevorzugt ist das Batteriemanagementsystem über die Kommunikationsschnittstelle mit demselben BUS-System verbunden, über das auch der Servomotor des Schwerlastventilantriebs mit Spannung und Daten versorgt wird und über das dieser mit einer Leitstelle des Transportpipelinebetreibers kommuniziert.

Weitere Einzelheiten der Erfindung sind der nachfolgenden Figurenbeschreibung zu entnehmen. In den schematischen Figuren zeigt:
Fig. 1 ein Ausführungsbeispiel eines erfindungsgemäßen Schwerlastventilantriebs in einer isometrischen Darstellung;
Fig. 2 einen Querschnitt durch den Schwerlastventilantrieb nach Fig. 1 im Bereich des Scotch-Yoke-Mechanismus sowie des Untersetzungsgetriebes.

Gleich oder ähnlich wirkende Teile sind, sofern dienlich, mit identischen Bezugsziffern versehen. Einzelne Merkmale des nachfolgend beschriebenen Ausführungsbeispiels können mit den Merkmalen des Anspruchs 1 sowie mit den Merkmalen einzelner vorbeschriebener Ausführungsbeispiele zu erfindungsgemäßen Gegenständen kombiniert werden.

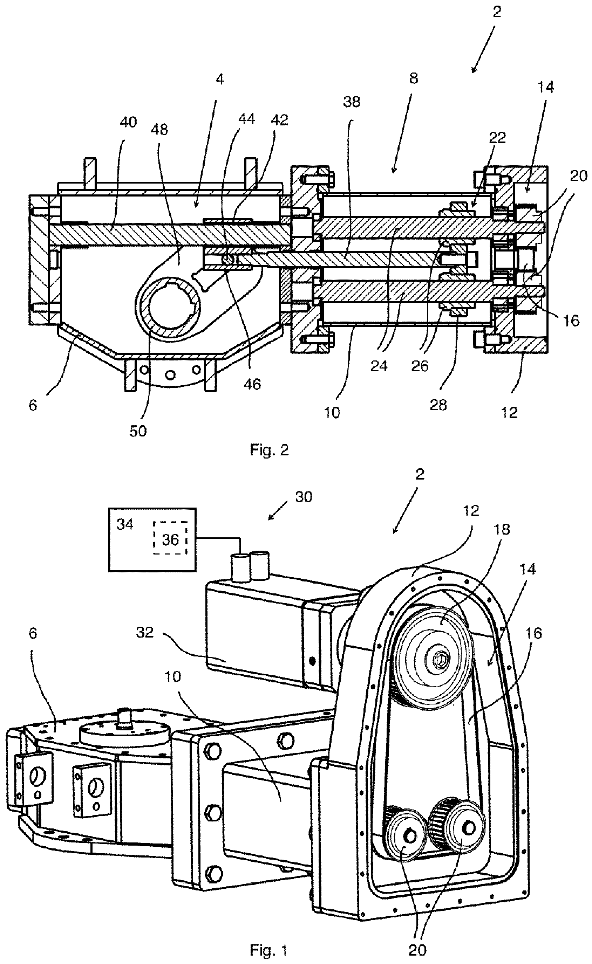

Fig. 1 zeigt einen erfindungsgemäßen Schwerlastventilantrieb 2 zum Antrieb eines Ventils in einer isometrischen Ansicht. An einem den Scotch-Yoke-Mechanismus 4 beherbergenden Gehäuse 6 ist ein ein Untersetzungsgetriebe 8 beherbergendes Getriebegehäuse 10 angeordnet. An das Getriebegehäuse 10 schließt sich ein Riemengehäuse 12 an, in dem ein Zahnriementrieb 14 angeordnet ist. Der Zahnriementrieb 14 umfasst einen Zahnriemen 16 sowie ein Antriebsrad 18 und zwei Abtriebsräder 20, die jeweils mit einer Spindel 24 eines Kugelgewindetriebs 22 des Untersetzungsgetriebes 8 verbunden sind. Das Antriebsrad 18 des Zahnriementriebs 14 wird durch einen Servomotor 32 angetrieben. Der Servomotor 32 umfasst zumindest einen Sensor zur Ermittlung der Drehposition. Der Servomotor 32 bildet zusammen mit einem Servoumrichter 34, der eine Steuerungseinrichtung 36 für den Servomotor 32 aufweist, einen Servoantrieb 30 aus. Durch den Zahnriementrieb 14 ist der Servomotor 32 schlupffrei mit den Spindeln 24 der Kugelgewindetriebe 22 des Untersetzungsgetriebes 8 verbunden. Durch die Elastizität des Zahnriemens 16 werden die Belastungen des Servomotors 32 beim Anfahren bzw. beim Überwinden des Losbrechmoments des Ventils vor einem zu plötzlichen Anstieg der Last und somit einer Überlastung geschützt.

In dem Querschnitt gemäß Fig. 2 ist sind einzelne Bestandteile des Schwerlastventilantriebs 2 detailliert dargestellt. Das im Getriebegehäuse 10 angeordnete Untersetzungsgetriebe 8 umfasst zwei Kugelgewindetriebe 22, die nebeneinander und parallel zueinander angeordnet sind. Die Spindelmuttern 26 der jeweiligen Kugelgewindetriebe 22 sind über ein Verbindungselement 28 miteinander verbunden. Mittig zwischen den Spindelmuttern 26 ist eine Kolbenstange 38 an dem Verbindungselement 28 angeordnet, durch die der Scotch-Yoke-Mechanismus 4 bewegt werden kann. Der Scotch-Yoke-Mechanismus 4 umfasst eine Führungsstange 40, entlang derer ein Gleitblock 42 verlagerbar ist. Der Gleitblock 42 ist mit einem Zapfen 44 verbunden, über den ein Gleitstein 46 in einer Ausnehmung einer Hebelschwinge 48 bewegbar ist. Die Hebelschwinge 48 mit der Ausnehmung bildet hierbei das Joch (Yoke) des Scotch-Yoke-Mechanismus 4. Die Hebelschwinge 48 ist an einer Welle 50 angeordnet, über die ein Ventilkörper des Ventils bewegbar ist.

Der Servomotor 32 treibt über den Zahnriementrieb 14 die Spindeln 24 der beiden Kugelgewindetriebe 22 des Untersetzungsgetriebes 8 an. Hierdurch werden die Spindelmuttern 26 entlang der Spindeln 24 bewegt. Die über das Verbindungselement 28 den Spindelmuttern 26 festgelegte Kolbenstange 38 bewegt den Gleitblock 42 entlang der Führungsstange 40, wodurch die Hebelschwinge 48 über den im Gleitblock 42 angeordneten Zapfen 44 und den daran angeordneten Gleitstein 46 in der Ausnehmung der Hebelschwinge 48 bewegt wird. Während der Bewegung ist der Hebelarm zwischen Zapfen 44 und dem Drehpunkt der Hebelschwinge 48 um die Welle 50 variabel. Somit können auf den Ventilkörper des Ventils große Drehmomente aufgebracht werden.

Durch die schlupffreie Antriebsverbindung zwischen dem Ventilkörper des Ventils und dem Servomotor 32 kann bei positionsgeregeltem Servomotor 32 aus den durch den Sensor des Servomotors 32 ermittelten Positionsdaten des Servomotors 32 auf die Position des Ventilkörpers des Ventils zurückgeschlossen werden. Weitere Sensoren oder Schalter, wie Endschalter, können entfallen.

Bei einem (zusätzlich oder alternativ) drehmomentgeregelten Servomotor 32 kann das Drehmoment des Servomotors 32 erfasst und somit auf das auf den Ventilkörper des Ventils aufgebrachte Drehmoment zurückgeschlossen werden. Aus den Veränderungen des durch den Servomotor 32 aufzubringenden Drehmoments zum Verstellen des Ventilkörpers des Ventils im Zeitablauf kann ein etwaiger Verschleiß frühzeitig festgestellt und einem Betreiber einer mit dem Schwerlastventilantrieb 2 versehenen Einrichtung gemeldet werden.

Der Schwerlastventilantrieb 2 gemäß dem Ausführungsbeispiel kann komplett erstellt verbaut werden. Er kann jedoch auch erhalten werden, indem der pneumatische oder hydraulische Antrieb eines Scotch-Yoke-Ventilantriebs entfernt und durch das Untersetzungsgetriebe 8, den Zahnriementrieb 14 und den Servomotor 32, ersetzt wird. Der vorhandene Scotch-Yoke-Mechanismus 4 bleibt dabei erhalten und wird über die Kolbenstange 38 mit dem Untersetzungsgetriebe 8, genauer dem die Spindelmuttern 26 verbindenden Verbindungselement 28, verbunden. Der Schwerlastventilantrieb 2 ist somit einfach unter Verwendung von Teilen eines vorhandenen Ventilantriebs nachrüstbar.

## Patentansprüche

1. Schwerlastventilantrieb (2) zur Bewegung eines Ventils, insbesondere einer Absperrklappe, mit einen Scotch-Yoke-Mechanismus (4), mit einem Servomotor (32) zum Antrieb des Scotch-Yoke-Mechanismus (4) sowie ein zwischen dem Servomotor (32) und dem Scotch-Yoke-Mechanismus (4) angeordnetes Untersetzungsgetriebe (8), wobei das Untersetzungsgetriebe (8) ausgebildet ist, eine Drehbewegung des Servomotors (32) in eine Linearbewegung einer Kolbenstange (38) des Scotch-Yoke-Mechanismus (4) umzuwandeln,
**dadurch gekennzeichnet, dass** das Untersetzungsgetriebe (8) zwei parallel nebeneinander angeordnete Kugelgewindetriebe (22) jeweils mit einer Spindel (24) und einer Spindelmutter (26) aufweist, deren Spindeln (24) durch denselben Servomotor (32) antreibbar sind und deren jeweilige Spindelmuttern (26) miteinander über ein Verbindungselement (28) verbunden sind, wobei eine Kolbenstange (38) des Scotch-Yoke-Mechanismus (4) mittig zwischen den Spindelmuttern (26) an dem Verbindungselement (28) festgelegt ist.

2. Schwerlastventilantrieb nach einem der vorhergehenden Ansprüche, **gekennzeichnet durch** einen Zahnriementrieb (14), der den Servomotor (32) mit dem Untersetzungsgetriebe (8) verbindendet.

3. Schwerlastventilantrieb nach einem der vorhergehenden Ansprüche, **dadurch gekennzeichnet, dass** der Servomotor (32) explosionsgeschützt ausgeführt ist.

4. Schwerlastventilantrieb nach einem der vorhergehenden Ansprüche, **dadurch gekennzeichnet, dass** der Servomotor (32) eine maximale Leistungsaufnahme zwischen 2,4 kW und 3,6 kW, bevorzugt zwischen 2,8 kW und 3,4 kW, besonders bevorzugt von 3,2 kW, aufweist.

5. Schwerlastventilantrieb nach einem der vorhergehenden Ansprüche, **dadurch gekennzeichnet, dass** der Schwerlastventilantrieb (2) ausgebildet ist, ein maximales Drehmoment zwischen 10.000 Nm und 250.000 Nm, bevorzugt zwischen 20.000 Nm und 150.000 Nm, auf das Ventil aufzubringen.

6. Schwerlastventilantrieb nach einem der vorhergehenden Ansprüche, **dadurch gekennzeichnet, dass** der Schwerlastventilantrieb (2) ausgebildet ist, das bei der Bewegung des Ventils auf das Ventil aufgebrachte Drehmoment zu ermitteln.

7. Schwerlastventilantrieb nach einem der vorhergehenden Ansprüche, **dadurch gekennzeichnet, dass** der Schwerlastventilantrieb (2) BUS-fähig ist.

8. Schwerlastventilantrieb nach einem der vorhergehenden Ansprüche, dadurch ekennzeichnet, dass der Schwerlastventilantrieb (2) einen Energiespeicher aufweist, der ausgebildet ist, bei einem Ausfall der Spannungsversorgung das Ventil in eine definierte Notfallposition zu bewegen.

9. Schwerlastventilantrieb nach Anspruch 8, **dadurch gekennzeichnet, dass** der Energiespeicher als Akkuspeicher ausgebildet ist.

10. Schwerlastventilantrieb nach Anspruch 9, **dadurch gekennzeichnet, dass** der Akkuspeicher ein Batteriemanagementsystem mit einer Kommunikationsschnittstelle aufweist, über das der Zustand des Akkuspeichers online überwachbar und/oder der Akkuspeicher fernwartbar ist.

## Claims

1. Heavy duty valve drive (2) for movement of a valve, in particular a shut-off valve, with a scotch yoke mechanism (4), with a servomotor (32) for driving the scotch yoke mechanism (4) as well as a reduction gearing (8) arranged between the servomotor (32) and the scotch yoke mechanism (4), wherein the reduction gearing (8) is formed to convert a rotational movement of the servomotor (32) into a linear movement of a piston rod (38) of the scotch yoke mechanism (4),
**characterized in that** the reduction gearing (8) has two ball screw drives (22) arranged parallel next to one another in each case with a spindle (24) and a spindle nut (26), the spindles (24) of which can be driven by the same servomotor (32) and the respective spindle nuts (26) of which are connected to one another via a connecting element (28), wherein a piston rod (38) of the scotch yoke mechanism (4) is fixed centrally between the spindle nuts (26) on the connecting element (28).

2. Heavy duty valve drive according to any one of the preceding claims, **characterized by** a toothed belt drive (15) which connects the servomotor (32) to the reduction gearing (8).

3. Heavy duty valve drive according to any one of the preceding claims, **characterized in that** the servomotor (32) is designed to be protected from explosion.

4. Heavy duty valve drive according to any one of the preceding claims, **characterized in that** the servomotor (32) has a maximum power consumption between 2.4 kW and 3.6 kW, preferably between 2.8 kW and 3.4 kW, particularly preferably of 3.2kW.

5. Heavy duty valve drive according to any one of the preceding claims, **characterized in that** the heavy duty valve drive (2) is formed to apply a maximum torque between 10,000 Nm and 250,000 Nm, preferably between 20,000 Nm and 150,000 Nm, on the valve.

6. Heavy duty valve drive according to any one of the preceding claims, **characterized in that** the heavy duty valve drive (2) is formed to determine the torque applied on the valve during the movement of the valve.

7. Heavy duty valve drive according to any one of the preceding claims, **characterized in that** the heavy duty valve drive (2) is BUS-compatible.

8. Heavy duty valve drive according to any one of the preceding claims, **characterized in that** the heavy duty valve drive (2) has an energy store which is formed to move the valve into a defined emergency position in the event of a failure of the power supply.

9. Heavy duty valve drive according to Claim 8, **characterized in that** the energy store is formed as a battery storage unit.

10. Heavy duty valve drive according to Claim 9, **characterized in that** the battery storage unit has a battery management system with a communication interface via which the state of the battery storage unit can be monitored online and/or the battery storage unit can be maintained remotely.

## Revendications

1. Entraînement de soupape pour charge lourde (2) pour le déplacement d'une soupape, notamment d'un clapet d'arrêt, avec un mécanisme à bille et coulisseau (4), avec un servomoteur (32) pour l'entraînement du mécanisme à bille et coulisseau (4) ainsi qu'un réducteur (8) agencé entre le servomoteur (32) et le mécanisme à bille et coulisseau (4), le réducteur (8) étant configuré pour convertir un mouvement de rotation du servomoteur (32) en un mouvement linéaire d'une tige de piston (38) du mécanisme à bille et coulisseau (4),
**caractérisé en ce que** le réducteur (8) comprend deux vis d'entraînement à billes (22) agencées parallèlement l'une à côté de l'autre, chacune avec une broche (24) et un écrou de broche (26), dont les broches (24) peuvent être entraînées par le même servomoteur (32) et dont les écrous de broche (26) respectifs sont reliés entre eux par l'intermédiaire d'un élément de liaison (28), une tige de piston (38) du mécanisme à bille et coulisseau(4) étant fixée au milieu entre les écrous de broche (26) sur l'élément de liaison (28).

2. Entraînement de soupape pour charge lourde selon l'une quelconque des revendications précédentes, **caractérisé par** une transmission par courroie crantée (14) reliant le servomoteur (32) au réducteur (8).

3. Entraînement de soupape pour charge lourde selon l'une quelconque des revendications précédentes, **caractérisé en ce que** le servomoteur (32) est protégé contre les explosions.

4. Entraînement de soupape pour charge lourde selon l'une quelconque des revendications précédentes, **caractérisé en ce que** le servomoteur (32) présente une puissance absorbée maximale comprise entre 2,4 kW et 3,6 kW, de préférence entre 2,8 kW et 3,4 kW, de manière particulièrement préférée de 3,2 kW.

5. Entraînement de soupape pour charge lourde selon l'une quelconque des revendications précédentes, **caractérisé en ce que** l'entraînement de soupape pour charge lourde (2) est configuré pour appliquer un couple maximal compris entre 10 000 Nm et 250 000 Nm, de préférence entre 20 000 Nm et 150 000 Nm, à la soupape.

6. Entraînement de soupape pour charge lourde selon l'une quelconque des revendications précédentes, **caractérisé en ce que** l'entraînement de soupape pour charge lourde (2) est configuré pour déterminer le couple appliqué à la soupape lors du mouvement de la soupape.

7. Entraînement de soupape pour charge lourde selon l'une quelconque des revendications précédentes, **caractérisé en ce que** l'entraînement de soupape pour charge lourde (2) est compatible avec les barres omnibus.

8. Entraînement de soupape pour charge lourde selon l'une quelconque des revendications précédentes, **caractérisé en ce que** l'entraînement de soupape pour charge lourde (2) présente un accumulateur d'énergie qui est configuré pour déplacer la soupape dans une position de secours définie en cas de panne de l'alimentation électrique.

9. Entraînement de soupape pour charge lourde selon la revendication 8, **caractérisé en ce que** l'accumulateur d'énergie est configuré sous forme d'accumulateur de batterie.

10. Entraînement de soupape pour charge lourde selon la revendication 9, **caractérisé en ce que** l'accumulateur de batterie présente un système de gestion de batterie avec une interface de communication, par l'intermédiaire de laquelle l'état de l'accumulateur de batterie peut être surveillé en ligne et/ou l'accumulateur de batterie peut être géré à distance.
